# FASCICULE DE BREVET EUROPEEN

(11) **EP 0 769 923 B1**
(45) Date de publication et mention de la délivrance du brevet: **22.09.1999**
(21) Numéro de dépôt: 95926340.1
(22) Date de dépôt: 04.07.1995
(51) Int. Cl.: A47L 11/40, A47L 9/28

(54) **DISPOSITIF ET ENGIN AUTOMATIQUE DE DEPOUSSIERAGE DE SOL**
AUTOMATISCHE MASCHINE UND VORRICHTUNG ZUR BODENENTSTAUBUNG
AUTOMATIC MACHINE AND DEVICE FOR FLOOR DUSTING

(30) Priorité: 04.07.1994 BE 9400629
(43) Date de publication de la demande: 02.05.1997
(73) Titulaire: Solar and Robotics S.A., 1050 Bruxelles (BE)
(72) Inventeur: COLENS, André, B-1330 Rixensart (BE)
(74) Mandataire: Colens, Alain
(86) Numéro de dépôt international: BE9500065
(87) Numéro de publication internationale: WO9601072

(56) Documents cités:
- EP-A- 0 221 423
- EP-A- 0 474 542
- EP-A- 0 488 884
- EP-A- 0 490 736
- EP-A- 0 584 888
- FR-A- 2 589 055
- GB-A- 2 278 937
- US-A- 5 109 566
- PATENT ABSTRACTS OF JAPAN vol. 11, no. 93 (P-559) 24 Mars 1987 & JP,A,61 245 215 (HITACHI LTD) 31 Octobre 1986
- PATENT ABSTRACTS OF JAPAN vol. 17, no. 348 (P-1566) 30 Juin 1993 & JP,A,05 046 239 (NEC HOME ELECTRON LTD) 26 Février 1993
- PATENT ABSTRACTS OF JAPAN vol. 15, no. 92 (C-0811) 6 Mars 1991 & JP,A,02 307 419 (MATSUSHITA ELECTRIC IND CO LTD) 20 Décembre 1990
- PATENT ABSTRACTS OF JAPAN vol. 15, no. 92 (C-0811) 6 Mars 1991 & JP,A,02 307 420 (MATSUSHITA ELECTRIC IND CO LTD) 20 Décembre 1990

## Description

La présente invention concerne un dispositif et système automatique de dépoussiérage de sol faisant intervenir un engin autonome se déplacant sur la surface du sol.

"De nombreux robots de dépoussièrage de sol ont été proposés dans l'art antérieur, par exemple dans les documents de brevets GB-A-2.278.937, EP-A-584.888 ou EP-A-490.736. Le document de brevet US 5.109.666 décrit un aspirateur robotique apte à se recharger automatiquement à une unité de recharge. Le robot se déplace sur la base d'une cartographie par blocs mise dans la mémoire d'un micro-ordinateur.

La présente invention vise à améliorer les dispositifs mentionnés ci-dessus de façon à augmenter l'autonomie et le fonctionnement automatique de ce type d'appareil.

De préférence, l'engin est en fonctionnement de manière continue, c'est à dire que l'utilisateur, une fois le dispositif installé, ne doit plus s'occuper d'amorcer ou d'interrompre une opération de dépoussiérage, ces fonctions étant automatiques. Selon un mode particulier de l'invention, l'engin est activé en permanence. Il peut être muni d'un dispositif, avantageusement programmable, interrompant ou initiant son fonctionnement en fonction de plages horaires ou d'autres paramètres (bruit, luminosité etc..).

Le dispositif et système selon l'invention se basent en effet sur l'utilisation d'un robot mobile de faible puissance et de petite taille couvrant la superficie à dépoussiérer de manière aléatoire ou quasi-aléatoire, combiné à un dispositif central de déchargement de poussière, de préférence un dispositif central d'aspiration, auquel le robot mobile vient périodiquement se raccorder afin de se vider de la poussière accumulée. Il est également prévu, de préférence intégré au dispositif central de déchargement, une unité de recharge pour recharger la ou les batteries rechargeables du robot mobile permettant ainsi un nouveau cycle de fonctionnement.

La présente invention propose donc un dispositif de dépoussiérage de sol comprenant au moins
- un engin mobile autonome muni d'une ou plusieurs batteries rechargeables, d'un moyen d'aspiration, d'un récipient à poussière, d'un moyen de détection et d'évitement d'obstacle et d'une unité de contrôle électronique comprenant un microprocesseur,
- une unité de recharge, essentiellement fixe, pour les batteries rechargeables contenues dans l'engin mobile, ladite unité étant associée à un moyen de guidage permettant audit engin mobile autonome de la rejoindre pour l'opération de recharge
- le microprocesseur étant associé à un algorithme d'évitement des obstacles et de recherche de l'unité de recharge
- une unité centrale de déchargement de la poussière, essentiellement fixe, associée à un moyen de guidage permettant audit engin mobile autonome de la rejoindre pour vidage périodique du récipient à poussière.

Dans la suite de la description, la référence à un système ou dispositif central d'aspiration ou à un aspirateur central inclut tout système ou dispositif équivalent, de décharge de poussière à partir du réservoir de poussière du robot mobile, y compris des dispositifs basés sur l'ouverture d'une issue de déchargement combiné au simple effet de gravité.

Selon un mode de réalisation de l'invention, le dispositif de recharge utilise un dispositif d'alimentation à induction.

De même, selon un autre mode de réalisation compatible avec ce dernier, le dispositif de répérage de l'unité centrale d'aspiration et de recharge utilise un algorithme basé sur le gradient de champ.

La station fixe se compose alors d'un aspirateur central muni d'un bac récolteur de capacité suffisante, d'un générateur à haute fréquence, per exemple 20 KHz, d'une bobine d'induction, et d'un module de contrôle électronique.

Selon un mode de réalisation, le robot présente un capot extérieur sous la forme d'une coquille approximativement semi-sphérique montée sur des ressorts solidaires d'un châssis supportant les autres composants du robot mobile. Ce montage rend l'engin très solide puisqu'un utilisateur l'engin très solide puisqu'un utilisateur peut par exemple marcher sur le capot sans endommager les composants internes. Le capot sous la pression exercée, se contente en effet de s'abaisser et de prendre appui sur sa périphérie inférieure en contact avec le sol.

Le capot a par exemple une hauteur de 15 cm et une largeur à la base de 30 cm. Il peut avantageusement être constitué en polyester. Le poids de l'engin peut être inférieur à deux kilos, une batterie d'environ 500 g comprise.

Selon un mode de réalisation, le robot mobile selon l'invention comprend un capot et un châssis, ce dernier supportant, indépendamment ou non, au moins :
- au moins une roue ou élément d'avancement tel une chenille, de préférence deux roues motrices latérales entraînées par au moins un, de préférence deux moteurs, chaque moteur étant contrôlé indépendamment de manière à pouvoir diriger le robot
- une unité d'aspiration située sous le capot
- un bac récolteur de poussière de faible capacité situé à l'intérieur dudit capot
- une unité de contrôle à microprocesseur
- une batterie rechargeable
- un système de détection et d'évitement d'obstacle, par détection de choc comparable à celui décrit pour une tondeuse à gazon robotique dans la demande de brevet WO 92/04817
- un système de guidage vers une unité de décharge de la poussière
- un système de guidage vers une unité de recharge
- un moyen de décharge de la poussière du bac à poussière moyen actionnable automatiquement à ladite unité de recharge

Pour des applications domestiques, la puissance du ventilateur en fonctionnement peut ne pas dépasser 5 à 10 Watt et celle des moteurs pour les roues 2 à 3 Watt. De préférence, la puissance maximum de l'engin ne dépassera pas 100 W, de préférence 50 Watts et sera en général inférieure à 25 W.

Pour des applications plus contraignantes, par exemple en dépoussièrage des sol industriel, la puissance peut dépasser 800 W.

Selon un mode de réalisation particulièrement avantageux, le robot mobile se déplace constamment sur la surface à entretenir par actionnement de deux roues, le troisième point d'appui pouvant avantageusement être constitué par l'orifice d'aspiration situé de manière excentrée par rapport à l'axe central vertical du capot vers l'arrière ou de préférence vers l'avant par rapport au sens de déplacement. Les deux roues motrices indépendantes, ainsi qu'éventuellement les moteurs y associés,se situent approximativement de part et d'autre du centre du châssis.

Selon un mode réalisation, cet orifice d'aspiration frotte donc la surface du sol. Sa conception particulière peut donc s'inspirer des orifices d'aspiration d'appareils ménagers traditionnels et par exemple être constitué d'éléments interchangeables.

Selon une variante de réalisation, l'orifice d'aspiration, ou une des pièces s'y adaptant, est munie d'une ou deux petites roues, maintenant l'orifice légèrement au dessus du niveau du sol, éventuellement avec un moyen de réglage de la hauteur.

Les déplacements du robot sont limités par les obstacles physiques présents dans et autour de la surface. On peut prévoir un système plus élaboré de délimitation de la surface au moyen d'un fil périphérique parcouru par un signal tel que décrit dans le brevet WO 92/04817 dans le cas d'un robot pour tondre le gazon.

Le robot peut également être avantageusement muni d'un détecteur de dénivellation lui permettant de faire demi-tour si celle-ci dépasse un certain seuil, en particulier au bord d'une marche d'escalier descendant. Dans ce but un bras senseur muni à son extrémité libre d'une roulette peut être prévu à l'avant de chaque roue. Le bras est solidaire du châssis par pivotement vertical. Lorsque une dénivellation importante se présente à l'avant d'une des roues, le bras suit la dénivellation par gravité et le pivotement résultant du bras active un interrupteur qui provoque la marche arrière de l'engin et son pivotement, l'algorithme étant similaire à celui prévu pour la détection d'obstacle.

Selon un autre mode de mise en oeuvre de l'invention, il est prévu un moyen de détection du débit de poussière aspirée. Le moyen de détection peut consister en un système de mesure de l'absorption et/ou de la réflection d'un rayon lumineux traversant la tuyère d'aspiration de l'engin. La quantité de poussière aspirée peut être un paramètre dont l'algorithme du microprocesseur tiendra compte pour le choix de la trajectoire à parcourir. Si la densité de poussière est importante la trajectoire du robot sera adaptée automatiquement pour parcourir entièrement la surface à densité importante de poussière. Cet algorithme peut être similaire à celui résultant de la détection d'une zone de gazon haut tel que décrit dans la demande de brevet WO 92/04817 déjà citée.

Selon un mode de réalisation on prévoit pour la détection et la mesure quantitative de la poussière aspirée un dispositif émetteur d'un rayon lumineux et un dispositif récepteur de rayon lumineux, tous deux disposés au niveau de la buse d'aspiration, entre l'orifice d'aspiration et le bac à poussière. On mesurera l'absorption ou la réflection selon que le récepteur se trouve ou ne se trouve pas dans l'axe du rayon émis. Pour la réflection, le dispositif émetteur et récepteur peuvent se trouver du même côté de la buse, plus ou moins juxtaposé. Cette dernière disposition s'est révélée particulièrement efficace pour l'appréciation quantitative de la poussière aspirée.

Selon un mode préféré de l'invention, lors de son utilisation , le robot peut se trouver dans quatre états distincts :
- en mode normal, la batterie est suffisamment chargée et le robot actif se déplace et aspire la poussière du sol se trouvant sur son chemin via l'orifice d'entrée prévu sous le capot. L'aspiration est obtenue par action d'un moyen d'aspiration, de préférence un ventilateur tel un ventilateur radial. L'air aspiré est filtré par un filtre classique puis rejeté par une ouverture latérale ou supérieure prévue dans la coque. La poussière et les petits débris sont récoltés de manière connue dans le bac ou un moyen équivalent tel un sac.
- lorsque le niveau de la batterie descend sous une valeur prédéfinie, le robot passe dans un deuxième état. Dans ce cas le ventilateur est arrêté et le robot se met en mode de recherche de l'unité de recharge, de préférence fonctionnellement couplé à l'aspirateur central, suivant un algorithme de recherche mémorisé dans le système de contrôle électronique,
- après s'être ainsi positionné sur le support de l'aspirateur central un troisième état est automatiquement enclenché. L'aspirateur central détecte la présence du robot sur son socle. Cette détection peut s'opérer par exemple grâce à son module de contrôle qui perçoit l'amortissement d'une boucle à induction si l'engin et le dispositif de recharge sont munis des dispositifs appropriés. L'aspirateur central fonctionne pendant quelques secondes en vidant le bac récolteur du robot via les orifices d'évacuation et la bouche d'aspiration placée dans le socle fixe sous le robot.
- dans un quatrième état l'aspirateur est arrêté mais le robot continue à se recharger via la boucle à induction jusqu'à ce que la mesure de charge de batterie communiquée au microprocesseur indique une charge suffisante.

Le robot repasse alors dans le premier état mentionné, quitte l'unité d'aspiration et de recharge central, se déplace et se remet ainsi en route pour un nouveau cycle de dépoussièrage du sol.

L'aspirateur central, de puissance généralement supérieure à l'aspirateur dont l'engin est muni, est connecté au réseau d'alimentation du bâtiment concerné et peut avantageusement être déplacé. Selon un autre mode de réalisation de l'invention, il peut également être incorporé ou encastré dans un mobilier ou dans un mur.

Il est bien entendu que le dispositif selon l'invention peut incorporer plusieurs robots mobiles. Ceux-ci sont susceptibles de fonctionner indépendamment, dans les cas les plus simples, en passant par exemple par les opérations susmentionnées.

La surface à entretenir peut être un parquet, un dallage, une surface synthétique, avec ou sans tapis, ou un tapis plain. L'invention est particulièrement adaptée au dépoussiérage de tapis plain. La surface peut comprendre plusieurs pièces communicantes y compris un palier d'escalier. Le dispositif sera avantageusement utilisé dans un appartement.

La localisation par le robot du point de ravitaillement et de l'aspirateur central peut nécessiter, dans certains cas, un système de guidage p.e. à l'aide de fils. De nombreux systèmes de filoguidage sont connus.

Selon un autre aspect de l'invention, particulièrement préféré, on propose cependant un robot mobile autonome capable de se réapprovisionner en énergie sans devoir se connecter physiquement à la source d'approvisionnement, en ne nécessitant pas de positionnement précis et en utilisant la source elle-même comme système de répérage et de guidage pour le réapprovisionnement en énergie.

Selon l'invention le robot mobile et autonome est muni d'un ordinateur et un circuit mesure l'intensité d'un champ oscillant produit par la source d'énergie elle-même. Les mesures d'intensité sont envoyées à l'ordinateur qui applique un algorithme particulier, pour donner les instructions nécessaires aux organes commandant le déplacement de l'engin. Sur la base de la variation d'intensité lors de son parcours, le robot selon l'invention peut se diriger vers la source d'alimentation.

Le système d'alimentation comprend une station fixe avec un générateur de courant alternatif HF connecté d'une part à une source de courant électrique, p.e. le réseau public 220 Y, et d'autre part à une boucle d'induction placée sur ou sous le socle de l'aspirateur central. Ce générateur peut fonctionner en permanence avec une perte très faible si aucune source de courant induit ne se trouve à proximité. La fréquence peut être de 20 KHz, la boucle d'induction mesurant de 10 à 20 cm de diamètre.

Dans ce mode de réalisation, le robot est par ailleurs équipé d'une bobine réceptrice placée dans sa partie inférieure et d'un circuit récepteur accordé sur la fréquence du courant alternatif du système fixe d'alimentation.

Le robot est muni d'un dispositif de filtrage et de redressement du courant induit capté par la bobine réceptrice, dispositif permettant la recharge d'une batterie. Ces dispositifs sont connus en soi.

Lorsque la recharge est terminée, l'algorithme de travail spécifique au robot reprend le relais jusqu'à nouvel épuisement de la batterie de recharge.

Le dispositif selon l'invention peut s'appliquer de différentes façons.

Selon un premier mode de réalisation, le plan de la boucle d'induction est perpendiculaire par rapport au plan de déplacement de l'engin.

La boucle réceptrice est placée à l'avant de l'engin mobile. L'axe de la boucle se trouve sur l'axe de déplacement de l'engin.

L'engin contient un ordinateur qui analyse entre autres les paramètres de charge d'une batterie rechargeable. Lorsque celle-ci doit être réalimentée, un algorithme particulier prend en charge les déplacements de l'engin.

Selon l'algorithme, l'engin effectue une rotation de 360 ° sur lui-même. La tension aux bornes de la bobine réceptrice passera alors par un maximum lorsque l'axe de la machine (et de la bobine) se trouvent dans la direction du générateur à induction, également perpendiculaire au plan de déplacement de l'engin.

L'engin se déplacera selon cet axe, aléatoirement, soit dans la direction de la source soit dans la direction opposée. Dans ce dernier cas, le gradient détecté est négatif et l'algorithme prévoit alors une rotation de 180° ce qui amène inévitablement l'engin sur la trajectoire adéquate pour se rapprocher de la source émettrice qui est aussi la source d'alimentation énergétique.

Le signal provenant de la bobine réceptrice est constamment analysé par l'ordinateur se trouvant à bord de l'engin qui agit sur les roues motrices de manière à diriger la machine vers le générateur, en se basant sur le gradient du signal émis. La machine s'arrête lorsque le signal reçu est suffisant pour assurer la recharge de la batterie.

Selon un second mode de réalisation de l'invention, plus particulièrement préféré, le plan de la boucle d'induction se trouve dans le plan de déplacement de l'engin. La boucle d'induction peut être posée sur le socle de l'aspirateur central ou placée en dessous de sa surface de déplacement.

La boucle réceptrice est placée en dessous de l'engin mobile dans le plan de déplacement de l'engin, de préférence le plus près possible du sol (quelques centimètres). Lorsque l'engin se déplace en direction du générateur, la machine coupe les lignes équipotentielles de l'émission perpendiculairement à celles-ci et le champ se renforce d'autant plus vite que la machine est plus près du générateur. Si la direction n'est pas perpendiculaire aux lignes équipotentielles, le gradient diminuera inévitablement à un moment donné.

Lorsque l'engin se déplace parallèlement aux lignes d'égale intensité, le champ reste pratiquement constant, la variation éventuelle étant inférieure au bruit de fond. L'ordinateur analyse la valeur absolue du champ et son gradient en fonction de l'avancement de l'engin, l'ordinateur peut diriger l'engin vers le générateur et l'arrêter lorsque le champ est maximum.

Ainsi lorsque, l'engin étant en mouvement, le champ mesuré à intervalle de temps donné est pratiquement constant (gradient inférieur à une valeur prédéterminée), l'algorithme prévoit de faire faire une rotation de 90° à l'engin d'un côté ou de l'autre. Si le gradient qui est alors mesuré est négatif, l'engin fait une deuxième rotation, cette fois de 180 °, le gradient étant alors positif jusqu'à un maximum prédéterminé ou se trouve le générateur, ou jusqu'à un minimum (valeur constante) lorsqu'il est tangent à une ligne d'égale intensité. Ce second cas se produira le plus souvent étant donné l'imprécision des mesures de champs , et accessoirement des rotations effectuées et des trajectoires suivies. Dans ce cas une nouvelle rotation de 90 ° est effectuée et le cycle peut reprendre jusqu'à une valeur du champ prédéterminée. En pratique l'engin arrive donc sur la station de réapprovisionnement par approximations successives. Dans les modes de réalisation susmentionnés, l'algorithme tient bien sûr compte d'autres facteurs tels les signaux de limite, s'ils existent, ou les obstacles qui ont priorité sur l'algorithme simplifié décrit ci-dessus.

Afin d'obtenir un transfert optimum de puissance de la bobine émettrice vers la bobine réceptrice, le positionnement exact de l'engin mobile par rapport au dispositif d'alimentation par induction fait appel à une combinaison de deux mesures :
- une mesure du champ induit A1 dans la bobine réceptrice effectuée au moyen d'un circuit sélectif, à haut gain, centré sur la fréquence d'oscillation du circuit d'alimentation, permettant de mesurer le signal à grande distance (plusieurs dizaines de mètres)
- une mesure du courant de charge A2 fournie par la bobine réceptrice.

Le courant de charge ne devient mesurable que lorsque les deux bobines sont très proches l'une de l'autre c'est-à-dire que le décentrage de l'une par rapport à l'autre ne dépasse pas leur diamètre.

L'ordinateur de l'engin tient compte d'une combinaison de A1 et de A2 pour estimer la valeur absolue A= A1 + A2 du champ.
La combinaison des deux mesures permet à la fois une détection à grande distance et un positionnement précis pour la superposition des deux bobines.

Le gradient du champ, c'est à dire sa variation sur une certaine distance, est inversément proportionnel au carré dela distance qui sépare l'engin mobile de la source d'alimentation.

De manière à avoir une résolution uniforme quelle que soit la distance de l'engin à la source d'alimentation, les mesures de champ se font à intervalles de distance d d'autant plus grands que l'éloignement de l'engin par rapport à la source est important. Par exemple
si Amax=500, d min= 2 cm, d= 1000 cm : A
si A=10 d = 1 m (loin de la source, environ 10 mètres)
A=100 d = 10 cm (près de la source, environ 1 mètre)
A=350 d = 3 cm (les deux bobines sont partiellement superposées, non centrées)

Il est bien entendu que l'algorithme pourra être modifié de façon à pouvoir s'adapter à des configurations complexes des obstacles (mobilier) et limites de la surface à dépoussiérer.

Ainsi, il peut se présenter que le robot soit séparé de la station fixe par un mur. Le détecteur d'obstacle aura bien sur priorité sur la procédure d'approche vers la station fixe. Dans ce cas on peut par exemple prévoir que le robot suive le mur, en réalisant à intervalle régulier des test de répérage de la station fixe, jusqu'au moment où la trajectoire vers celle-ci ne se trouve plus coupée par un obstacle.

Il est à noter que d'autres systèmes d'orientation peuvent être appliqués pour que le robot s'oriente et retrouve sa station de recharge. Dans le cas de certaines constructions à armature métallique, il peut s'avérer avantageux d'utiliser un système d'orientation et de guidage par rayons infra-rouges, avec des émetteurs placés judicieusement et un, ou de préférence deux détecteurs infra-rouges, localisés sur le robot et dont les mesures sont envoyées au microprocesseur. Il est particulièrement avantageux de prévoir un système ou le guidage et l'orientation à longue distance est basé sur un dispositif infra-rouge, tandis qu'à courte distance il se base sur le dispositif à induction décrit ci-dessus.

L'invention sera mieux comprise à l'examen des dessins en annexe donnés à titre d'exemple seulement dans lesquels :
la fig. 1 représente le circuit de la station fixe d'alimentation et le circuit complémentaire de l'engin mobile
la fig. 2 est un schéma électronique représentant un circuit oscillant émetteur tel qu'utilisé selon le dispositif de la fig. 1
la fig. 3 illustre l'algorithme de répérage utilisé dans le second mode de réalisation de l'invention.
La fig. 4 est une coupe schématique de l'engin mobile selon l'invention.
La fig. 5 est une vue en plan du dessous de l'engin mobile selon l'invention
La fig. 6 illustre le dispositif central de recharge et d'aspiration
La fig. 7 illustre de manière schématique et simplifiée les fonctions du dispositif central de recharge et d'aspiration
La fig. 8 illustre de manière schématique et simplifiée les fonctions des modules compris dons l'engin mobile

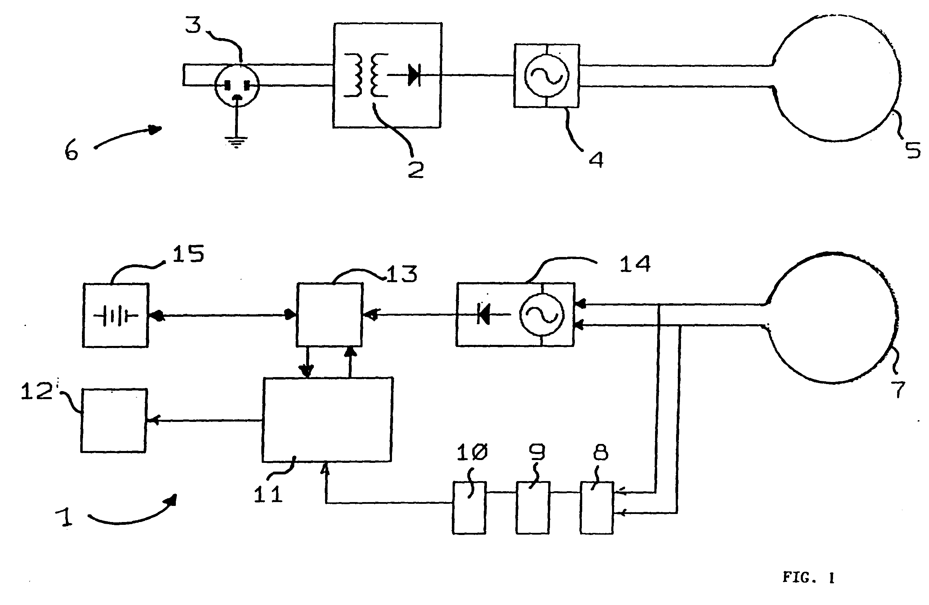

Dans la figure 1 on représente une vue schématique en plan d'une part la station fixe 6 et d'autre part le robot autonome 6. La station fixe 6 comprend un redresseur 2 connecté au réseau 3 de distribution 220 Y. Le courant continu alimente un circuit oscillateur 4 de 20 Kz relié à une bouche d'induction 5 placé quelques centimètres sous la face de réception du socle.

Le robot autonome 1 comprend une boucle de réception 7 circuit de détection composé lui-même d'un filtre 8, d'un amplificateur 9 et d'un convertisseur analogique-digital 10, relié à un microprocesseur 11. Le microprocesseur est lui-même relié à l'unité de contrôle de direction 12 et de contrôle d'alimentation 13 connecté à la boucle de réception d'une part et à la batterie 15 d'autre part pour recharger cette dernière.

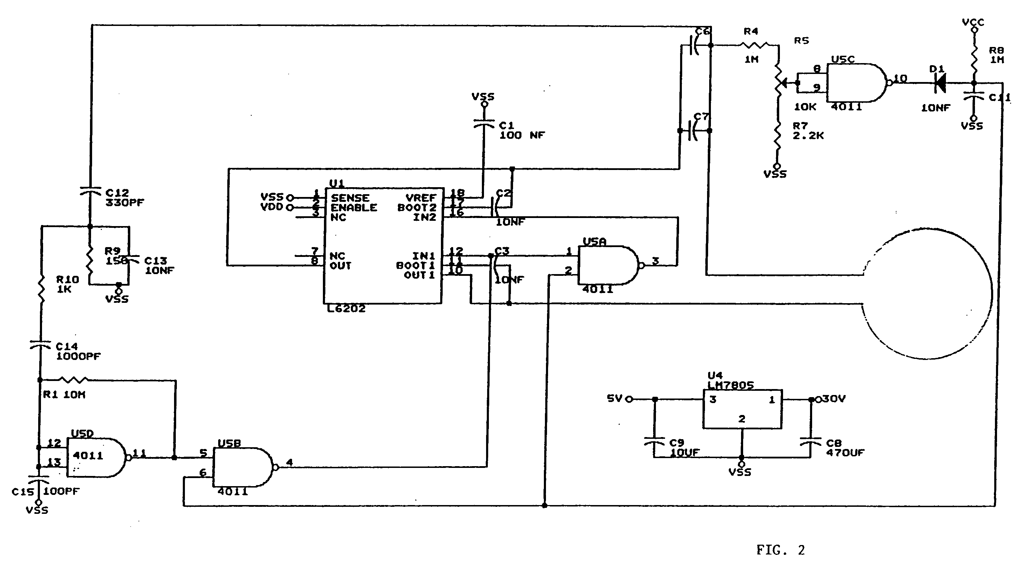

La fig. 2 représente schématiquement un exemple de réalisation du circuit oscillant émetteur selon le second mode de réalisation. Dans ce cas particulier, la fréquence de l'oscillateur est de 25 KHz, les diamètres des bobines de 20 cm, le nombre de spires de la station fixe est de 70 (diamètre de 0.8 mm), le nombre de spire de la station mobile est de 14 cm. La distance entre les deux bobines lors de la recharge est de 4 cm. Le courant de charge est de 750 mA (correspondant à un temps de recharge moyen pour une batterie de 12 V , de 1 à 2 heures). La tension de charge est alors de 13,5 V.

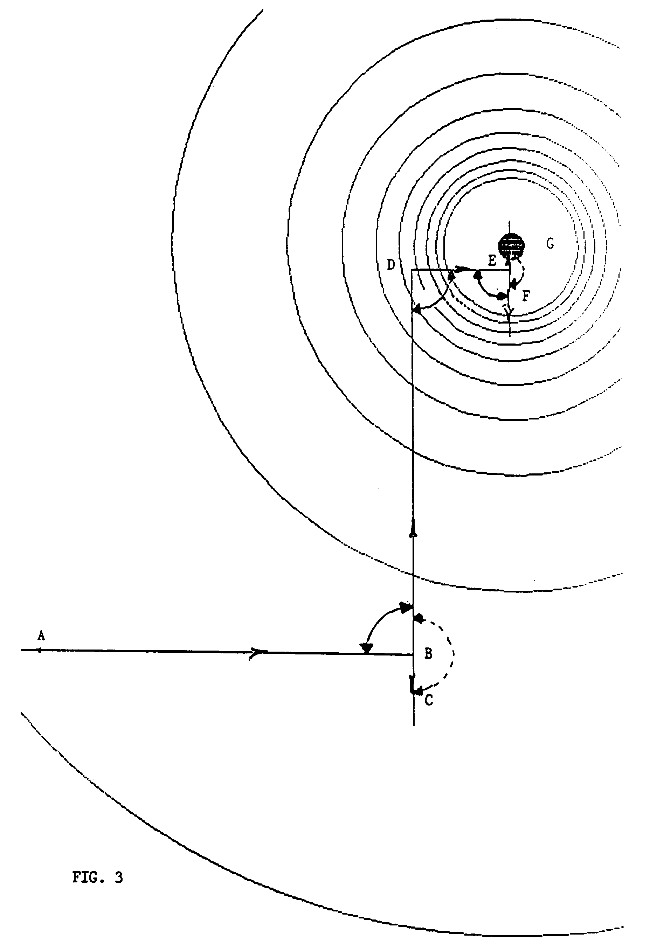

La fig. 3 est une vue en plan qui illustre les cercles d'égales intensité de champ ainsi que l'algorithme suivi par le robot autonome pour rejoindre la station fixe. Dans cet exemple, le robot arrive au point de recharge après 3 pivotements de 90°, avec deux fois une correction de 180° lorsque la direction suivie est opposée à celle menant au point d'alimentation. La trajectoire suivie passe successivement par les points A,B,C,B,D,E,F,E avant d'arriver à la station de recharge G.

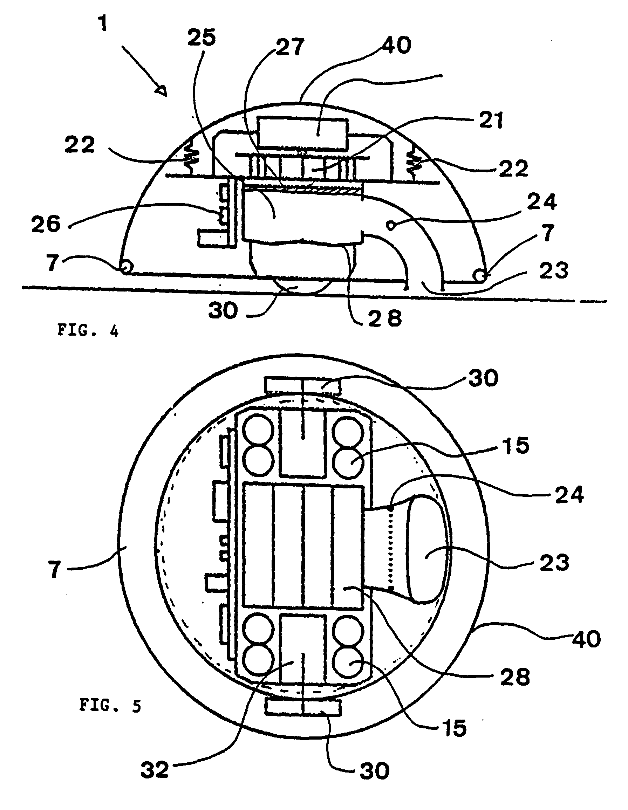

La fig. 4 est une coupe schématique illustrant les différents composants d'un engin aspirateur mobile qui fait partie de la présente invention. L'engin comprend essentiellement trois moteurs 32, 32' et 20 pour l'actionnement respectivement des deux roues 30 et 30', latérales par rapport au sens de déplacement de l'engin et de la turbine 21 du dispositif d'aspiration. Le capot approximativement hémisphérique 40 est soutenu solidaire au châssis par, dans l'exemple illustré, deux ressorts 22. On prévoit également un filtre d'aspiration 27, un réservoir à poussière 25 dont le fond est muni de clapets de déchargement 28, p.e. monté sur ressorts. L'orifice d'aspiration 23 se situe sous l'engin à l'entrée d'une tubulure d'aspiration reliée de manière connue au réservoir à poussière et à la turbine d'aspiration. La tubulure d'aspiration comprend un dispositif détecteur de poussière optique permettant d'apprécier la densité de poussière aspirée. Ce dispositif peut comprendre une mesure de l'absorption et de la réflection d'un rayon lumineux traversant la tuyère ou tubulure d'aspiration de l'engin. L'orifice d'aspiration peut être muni, de manière classique de différents accessoires adapté à la surface du soi à dépoussiérer (brosses etc..). L'engin est muni d'un circuit de commande 26 explicité par ailleurs et d'une bobine réceptrice 7 au pourtour inférieur du capot avec connection flexible au châssis central.

La fig. 5 est une vue en plan du dessous de l'engin mobile de la fig. 4 illustrant de plus les batteries rechargeables 31.

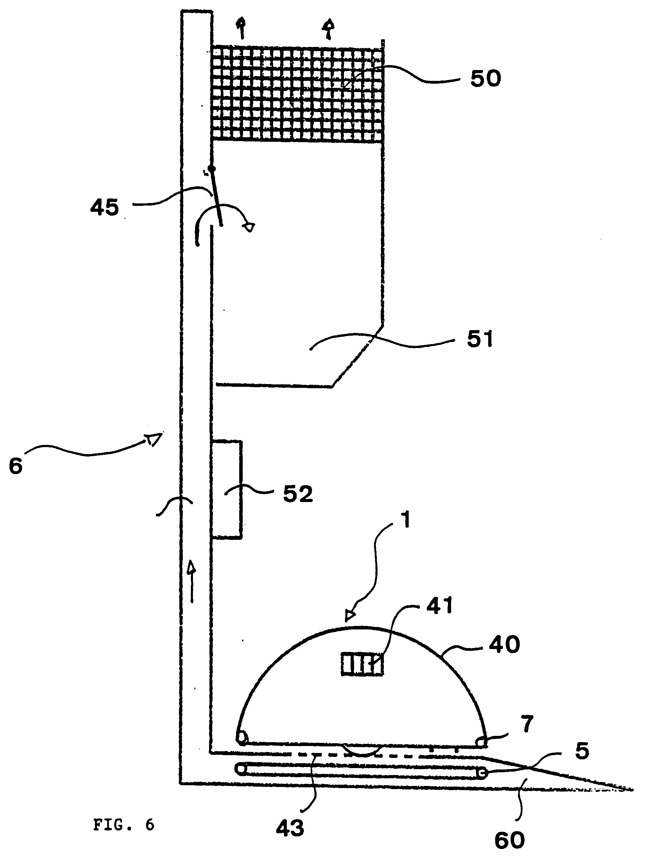

La fig. 6 illustre le dispositif central 6 de recharge et d'aspiration fixe qui comprend donc un socle 60 accessible à l'engin mobile dont la coque est munie d'une grille 41 de refoulement associé à la turbine d'aspiration 21. Le socle est muni sous sa surface de réception d'une bobine d'induction horizontale 5 adaptée fonctionnellement à la bobine d'induction 7 de l'engin mobile 1 lorsque celui-ci s'y trouve, ainsi que d'une grille d'aspiration 43 avec un conduit relié, via un conduit 44 et un clapet 45, à un aspirateur central 50 muni d'un réservoir à poussière central, éventuellement amovible et/ou déchargeable. La station fixe est alimentée par le secteur. En 52 on représente le module de contrôle et circuit d'alimentation du dispositif de recharge.

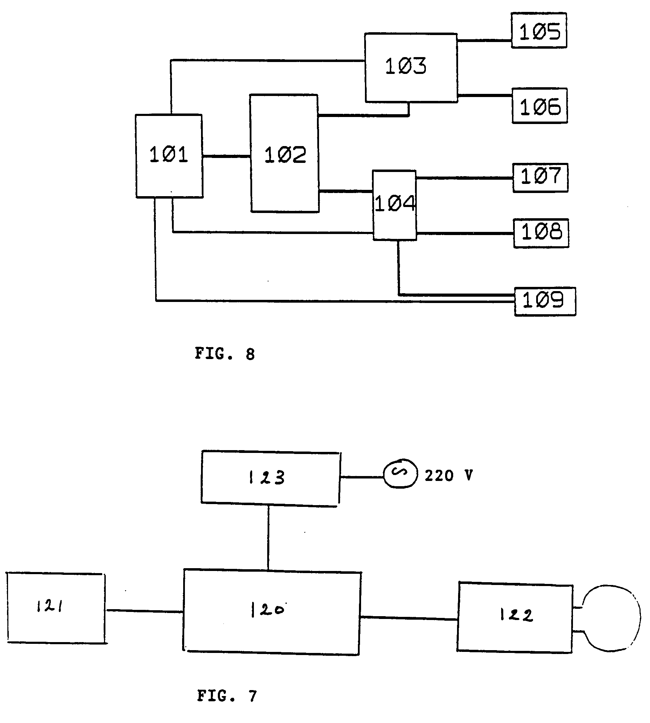

La fig. 7 est un schéma blocs dudit dispositif de contrôle et circuit d'alimentation du dispositif de recharge montrant en 120 un module de contrôle comprenant la logique nécessaire à la détection de présence du robot sur son emplacement de charge, la programmation du temps d'aspiration de l'aspirateur fixe, le contrôle et la vérification du fonctionnement de l'alimentation à induction. En 121 on représente le relais de mise en marche de l'aspirateur fixe contrôlé par le module 120. En 122 on représente l'alimentation à induction et en 123 l'alimentation de l'électronique par le secteur.

La fig. 8 est un schéma blocs illustrant de manière schématique et simplifiée les fonctions des modules compris dans l'engin mobile. En 101 on représente le module d'acquisition de mesure pour, notamment, la tension de batterie, le courant de charge, le signal de détection de position, la vitesse des roues et la densité de poussière. Un microprocesseur de contrôle 102 est prévu dans lequel est stocké le programme correspondant aux différents cycles du robot. En 103 on illustre le module de commande du système d'alimentation incluant le contrôle de batterie 105 et le contrôle du système de recharge. On représente encore en 106 l'alimentation par induction, en 104 le module de contrôle des moteurs d'entraînement et d'aspiration, en 107 le moteur d'entraînement droit, en 108 le moteur d'entraînement gauche et en 109 le moteur d'aspiration.

On notera enfin que le robot mobile selon l'invention peut être muni d'un système antivol, par exemple par émission de signaux, sonores ou électromagnétiques, dès qu'il n'est plus en contact avec le sol ou dès qu'il s'éloigne au delà d'un certain périmètre.

## Revendications

1. Dispositif de dépoussiérage de sol comprenant au moins
- un engin mobile autonome (1) muni d'une on plusieurs batteries rechargeables, d'un moyen d'aspiration, d'un récipient à poussière (25), d'un moyen de détection et d'évitement d'obstacle et d'une unité de contrôle électronique comprenant un microprocesseur (11),
- une unité de recharge (6), essentiellement fixe, pour les batteries rechargeables (31) contenues dans l'engin mobile, ladite unité étant associée à un moyen de guidage (5, 7, 10, 11) permettant audit engin mobile (1) autonome de la rejoindre pour l'opération de recharge
- le microprocesseur (11) étant associé à un algorithme d'évitement des obstacles et recherche de l'unité de recharge (6)
caractérisé en ce qu'il comprend
- une unité centrale de déchargement de la poussière (50, 60), essentiellement fixe, associée à un moyen de guidage permettant audit engin mobile autonome (1) de la rejoindre pour vidage périodique du récipient à poussière (25).

2. Dispositif de dépoussiérage selon la revendication 1 caractérisé en ce que l'aspirateur central (43, 50, 51) et le système de recharge (5) sont localisés au même endroit et intégrés l'un à l'autre, le moyen de guidage étant commun.

3. Dispositif de dépoussiérage du sol selon la revendication 1 ou 2 caractérisé en ce que l'unité centrale de déchargement de la poussière comprend un aspirateur (50).

4. Dispositif de dépoussièrage du sol selon les revendications 1 à 3 caractérisé en ce que la recharge des batteries (31) se fait par induction.

5. Dispositif Selon n'importe laquelle des revendications précédentes caractérisé en ce qu'il comprend des moyens de détection de dénivellation brusque.

6. Dispositif selon n'importe laquelle des revendications précédentes caractérisé en ce que l'engin (1) comprend un moyen de détection (24) de la densité instantanée de poussière aspirée et que ce dernier paramètre est pris en compte dans l'algorithme de déplacement de l'engin (1).

7. Dispositif selon la revendication 6 caractérisé en ce que le moyen de détection (24) de la densité de la poussières aspirée comprend une mesure de l'absorption et de la réflection d'un rayon lumineux traversant la tuyère (23) d'aspiration de l'engin (1).

8. Engin (1) mobile pour aspiration des poussières du sol comprenant un capot (40) et un châssis, ce dernier supportant au moins :
- au moins deux roues motrices latérales (30,30') entraînées par deux moteurs (32, 32'), chaque moteur étant contrôlé indépendamment de manière à pouvoir diriger le robot (1)
- une unité d'aspiration (21) située sous un capot (40)
- un bac récolteur de poussière (25) de faible capacité situé à l'intérieur dudit capot (40)
- une unité de contrôle à microprocesseur (11)
- une batterie rechargeable (31)
- un système de détection et d'évitement d'obstacle
- un système de guidage ver une unité de décharge de la poussière
- un système de guidage vers une unité de recharge (6)
caractérisé en ce qu'il comprend également un moyen de décharge (28) de la poussière du bac à poussière (25), moyen actionnable automatiquement à ladite unité de recharge (6).

9. Engin selon la revendication 8 caractérisé en ce que la puissance maximale consommée est de 25 Watt, et de préférence inférieure à 12 Watt.

10. Engin Selon revendications 8 et 9 caractérisé en ce qu'il se déplace sur la superficie à dépoussiérer de manière aléatoire ou quasi-aléatoire.

11. Méthode dépoussièrage de sol utilisant un dispositif comprenant un engin mobile (1) muni d'un microprocesseur (11) de contrôle et de commande associé à un algorithme d'évitement des obstacles et d'un moyen d'aspiration (21), l'engin mobile (1) accumulant la poussière et comprenant une ou des batteries rechargeables (25) qui sont rechargées à une station fixe (6) que l'engin (1) peut rejoindre automatiquement lorsqu'une recharge s'impose
caractérisé en ce que l'opération de recharge est couplée à un vidage, à la station fixe (6), de la poussière accumulée et en ce que le dispositif est utilisé de manière permanente ou quasi-permanente, l'engin (1) se déplacant de manière essentiellement aléatoire sur le sol à dépoussiérer.

## Claims

1. Arrangement for dusting a floor comprising at least
- a self-contained mobile machine (1) fitted with one or several rechargeable batteries, a means for suction cleaning, a dust container (25), a means for detecting and avoiding an obstacle and a electronic control unit comprising a microprocessor (11),
- a central recharging unit (6) essentially stationary, for the rechargeables batteries (31) contained within the mobile machine, said unit being associated to a guide means (5, 7, 10, 11) allowing said self-contained mobile machine (1) to reach the unit for the recharging operation
- the microprocessor (11) being associated to an algorithm for avoiding the obstacles and searching the recharging unit (6)
characterized in that said arrangement comprises
- a central unit for discharging the dust (50, 60), the unit being essentially stationary and being associated to a guide means allowing said self contained mobile machine (1) to reach the unit for periodically emptying the dust container (25).

2. Arrangement for dusting a floor according to claim 1 characterized in that the central dust discharging unit (43,50,51) and the recharging unit (5) are located at the same location and integrated one with another, the guide means being common.

3. Arrangement for dusting a floor according to claim 1 or 2 characterized in that the central unit (50,60) for discharging the dust comprises a suction unit (50)

4. Arrangement for dusting a floor according to any of the claims 1 to 3 characterised in that the operation for recharging the batteries (31) is performed by induction.

5. Arrangement for dusting a floor according to any of the preceding claims characterized in that it comprises a means for detecting sudden drop in the level of the floor.

6. Arrangement for dusting a floor according to any of the preceding claims characterized in that the machine (1) comprises a means (24) for detecting the instantaneous density of sucked dust and that the latter parameter is taken into account in the algorithm for moving the machine.

7. Arrangement for dusting a floor according to claim 6 characterized in that the means (24) for detecting the sucked dust density comprises a measurement of the absorption and/or of the reflection of a light crossing the suction nozzle (23) of the machine (1).

8. Mobile machine (1) for dust suction cleaning of the floor comprising a casing (40) and a chassis, the latter being fitted with at least :
- at least two side driving wheels (30, 30') driven by two motors, each motor being independently controlled in order to direct the robot (1)
- a suction unit (21) located under the casing (40)
- a dust collecting container (25) of small capacity located in the inside of said casing (40)
- a microprocessor based control unit (11)
- a rechargeable battery (31)
- a system for detecting and avoiding an obstacle
- a guiding system directed to a dust discharging unit
- a guiding system, directed to a recharging unit (6) characterized in that it comprises also a dust discharging means (28) of the dust from the dust collector (25), said means being automatically actuated at said recharging unit (6).

9. Machine according to claim 8 characterized in that the maximum power used is 25 Watt, and is preferably less than 12 Watt.

10. Machine according to claims 8 or 9 characterised in that the machine is apt to move on the surface to be dusted in a random or essentially random way.

11. A method for dusting a floor by use of an arrangement comprising a mobile machine (1) fitted with a control microprocessor (11) associated to an algorithm for avoiding the obstacles and with a means for suction cleaning (21), said mobile machine (1) accumulating the dust and comprising rechargeable batteries (25) which are recharged in a station, said station being joined automatically by the machine when a recharge is required, characterized in that the recharging operation is coupled with the emptying operation and in that the arrangement is used in a continuous or nearly continuous way, the machine (1) moving in a essentially random way over the floor to be dusted.

## Patentansprüche

1. Vorrichtung zur Staubentfernung von Böden, mit wenigstens
- einer autonomen mobilen Maschine (1), die mit einer oder mehreren wiederaufladbaren Batterien, einer Staubsaugeinrichtung, einem Staubbehälter (25), einer Vorrichtung zum Erkennen und Umgehen von Hindernissen und einer elektronischen Kontrolleinheit, die einen Mikroprozessor (11) umfaßt, versehen ist,
- einer im wesentlichen ortsfesten Ladeeinheit (6) für die aufladbaren Batterien (31), die sich in der mobilen Maschine befinden, wobei die genannte Einheit mit einer Führungseinrichtung (5, 7, 10, 11) versehen ist, die es der genannten autonomen mobilen Maschine (1) ermöglicht, sich für den Aufladevorgang wieder einzufinden
- wobei der Mikroprozessor (11) mit einem Algorithmus zum Umgehen von Hindernissen und zum Erkennen der Ladeeinheit (6) versehen ist dadurch gekennzeichnet, daß sie
- eine zentrale Einheit zur Staubentleerung (50, 60) umfaßt, die im wesentlichen ortsfest ist, die mit einer Führungseinrichtung versehen ist, die es der genannten autonomen mobilen Maschine (1) ermöglicht, sich zur periodischen Entleerung des Staubbehälters (25) einzufinden

2. Vorrichtung zur Staubentfernung von Böden gemäß Anspruch 1, dadurch gekennzeichnet, daß der zentrale Staubsauger (43, 50, 51) und die Ladeeinheit (5) sich am selben Ort befinden und ineinander integriert sind, wobei die Führungseinrichtung beiden gemeinsam zugeordnet ist.

3. Vorrichtung zur Staubentfernung von Böden gemäß Anspruch 1 oder 2, dadurch gekennzeichnet, daß die zentrale Einheit zur Staubentleerung einen Staubsauger (50) umfaßt.

4. Vorrichtung zur Staubentfernung gemäß den Ansprüchen 1 bis 3, dadurch gekennzeichnet, daß das Aufladen der Batterien (31) mittels Induktion erfolgt.

5. Vorrichtung nach einem der vorangehenden Ansprüche, dadurch gekennzeichnet, daß sie Mittel zum Erkennen abrupter Höhenunterschiede umfaßt.

6. Vorrichtung nach einem der vorangehenden Ansprüche, dadurch gekennzeichnet, daß die Maschine (1) eine Einheit (24) zum Erkennen der momentanen Dichte des aufgesaugten Staubes aufweist und daß dieser letztgenannte Parameter im Algorithmus zum Verfahren der Maschine (1) berücksichtigt wird.

7. Vorrichtung nach Anspruch 6, dadurch gekennzeichnet, daß die Einheit (24) zum Erkennen der Dichte des aufgesaugten Staubes eine Einrichtung zur Messung der Absorption und Reflexion eines den Saugschlauch (23) der Maschine (1) durchdringenden Lichtstrahles aufweist.

8. Mobile Maschine (1) zum Aufsaugen von Bodenstaub mit einer Haube (40) sowie einem Chassis, wobei das letztere wenigstens trägt:
- zwei von zwei Motoren (32, 32') beaufschlagte seitliche Antriebsräder (30, 30'), wobei jeder Motor derart unabhängig ansteuerbar ist, daß der Roboter (1) gelenkt werden kann,
- eine unter der Haube (40) angeordnete Staubsaugeinrichtung (21)
- einen Staubsammelbehälter (25) geeigneter Kapazität, der im Inneren der genannten Haube (40) angeordnet ist
- eine mit einem Mikroprozessor (11) ausgestattete Kontrolleinheit
- eine wiederaufladbare Batterie (31)
- ein System zum Erkennen und Umgehen von Hindernissen
- ein System zur Hinführung zu einen Staubentnahmeeinheit
- ein System zur Hinführung zu einer Ladestation (6) dadurch gekennzeichnet ,daß sie zugleich eine Einheit (28) zur Entnahme des Staubes aus dem Staubsammelbehälter (25) umfaßt, wobei diese Einheit automatisch durch die genannte Ladestation (6) aktivierbar ist.

9. Maschine gemäß Anspruch 8, dadurch gekennzeichnet, daß die maximale Leistungsaufnahme 25 Watt und vorzugsweise weniger als 12 Watt beträgt.

10. Maschine gemäß den Ansprüchen 8 und 9, dadurch gekennzeichnet, daß sie sich auf der zu reinigenden Oberfläche aleatorisch oder quasialeatorisch bewegt.

11. Verfahren zur Staubentfernung von Böden mittels einer Vorrichtung, die eine mobile Maschine (1) umfaßt, die mit einem Mikroprozessor (11) zur Kontrolle und Steuerung versehen ist, dem ein Algorithmus zuUmgehen von Hindernissen und eine Staubsaugeinheit (21) zugeordnet ist, wobei die mobile Maschine (1) den Staub sammelt und eine oder mehrere wiederaufladbare Batterien (25) aufweist, die an einer ortsfesten Station (6) aufladbar sind, an der sich die Maschine (1) automatisch einfinden kann, wenn eine Aufladung erforderlich ist dadurch gekennzeichnet, daß der Ladevorgang mit einer Entleerung des gesammelten Staubes an der ortsfesten Station (6) verbunden ist derart, daß die Vorrichtung permanent oder quasi-permanent einsetzbar ist, wobei sich die Maschine im wesentlichen aleatorisch über den zu reinigenden Boden bewegt.
